(19) Europäisches Patentamt
European Patent Office
Office européen des brevets

(11) **EP 3 279 494 B1**

(12) **FASCICULE DE BREVET EUROPEEN**

(45) Date de publication et mention de la délivrance du brevet:
**19.06.2019 Bulletin 2019/25**

(51) Int Cl.:
***F16D 48/02*** *(2006.01)*

(21) Numéro de dépôt: **17184818.7**

(22) Date de dépôt: **03.08.2017**

(54) **SYSTEME D'ACTUATION HYDRAULIQUE D'UN DISPOSITIF D'EMBRAYAGE, NOTAMMENT POUR VEHICULE AUTOMOBILE**

HYDRAULISCHE KUPPLUNGSBETÄTIGUNG, INSBESONDERE FÜR EIN KFZ

HYDRAULIC ACTUATION SYSTEM OF A CLUTCH, MAINLY FOR AUTOMOBILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.08.2016 FR 1657612**

(43) Date de publication de la demande:
**07.02.2018 Bulletin 2018/06**

(73) Titulaire: **JTEKT HPI**
**94430 Chennevieres sur Marne (FR)**

(72) Inventeurs:
• **LESTHER, Nicaise**
**94000 CRETEIL (FR)**
• **EYRAUD, Philippe**
**75015 PARIS (FR)**
• **POUSSET, Yves**
**94210 La Varenne Saint Hilaire (FR)**

(74) Mandataire: **Berger, Helmut**
**Cabinet Madeuf**
**176 avenue Charles de Gaulle**
**92200 Neuilly-sur-Seine (FR)**

(56) Documents cités:
**WO-A1-2008/009547    WO-A2-2015/114125**
**FR-A1- 2 703 007**

**Description**

L'invention concerne un système d'actuation hydraulique d'un dispositif d'embrayage, notamment pour véhicule automobile, qui comprend un groupe électropompe comportant une pompe volumétrique et un moteur électrique d'entraînement en rotation de la pompe et un vérin hydraulique récepteur du liquide provenant de la pompe (voir FR 2703007 et WO2015/114125 comme état de la technique).

Des systèmes de ce type sont déjà connus, notamment pour des véhicules de transport terrestres équipés d'un moteur à combustion interne, qui comportent une boîte de vitesses manuelle et un dispositif d'embrayage pour adapter la vitesse du moteur à celle du véhicule. La commande hydraulique d'embrayage comprend un vérin hydraulique émetteur actionné par une pédale activée par le conducteur du véhicule et un vérin hydraulique récepteur destiné à appliquer un effort sur un diaphragme d'embrayage en forme d'un ressort permettant de maintenir l'embrayage fermé s'il n'y a pas d'action sur la pédale. Dans ce cas, la force d'appui est déterminée pour transmettre tout le couple fourni par le moteur. Il est également connu de réaliser des systèmes d'actionnement d'embrayage automatique, notamment électrique. Dans ces systèmes, le volume de liquide à transférer dans le vérin récepteur, qui conditionne le déplacement du diaphragme, est régulé par une ou plusieurs valves pilotées.

L'invention a pour but d'améliorer des systèmes de commande d'embrayage automatique connus.

Pour atteindre ce but, le système de commande selon l'invention est caractérisée-en ce qu'il comprend un dispositif de pilotage de la vitesse de rotation du moteur d'entraînement de la pompe et un capteur de la position du piston du vérin récepteur, qui est intégré dans une boucle fermée de régulation de la position du piston du vérin.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :

- La figure 1 est une vue schématique d'un système d'actuation hydraulique d'embrayage à commande électrique de l'état de la technique ;

- la figure 2 est un schéma illustrant la relation entre l'effort de compression EC exercé sur le diaphragme d'embrayage et la course x du piston du vérin récepteur et butée d'embrayage de type sec ;

- la figure 3 est une vue schématique d'un premier mode de réalisation du système d'actuation hydraulique d'embrayage selon l'invention ;

- la figure 4 est une vue schématique de la boucle de régulation du système selon l'invention ;

- la figure 5 est une vue schématique du calculateur électronique du système selon la figure 4,

- les figures 6 à 8 montrent trois autres modes de réalisation du système selon l'invention, et

- la figure 9 est une vue montrant un graphe indiquant la relation entre la position xd du piston du vérin et le temps t lors d'un rembrayage.

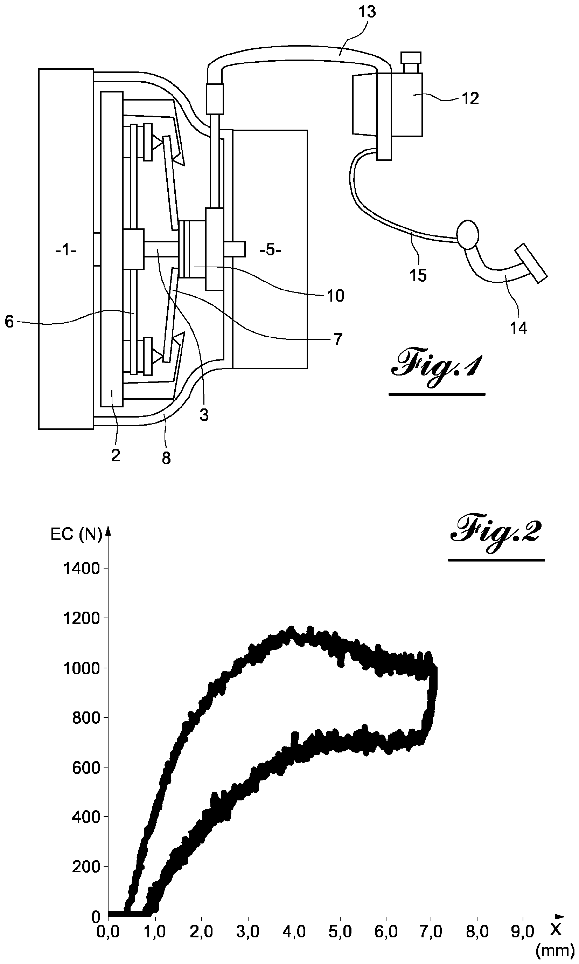

L'invention sera décrite ci-après dans son application à un système d'actuation hydraulique d'embrayage à commande électrique du type représenté à la figure 1. Sur cette figure, on voit en 1 un moteur, en 2 le volant moteur et en 3 l'arbre de la boîte de vitesses 5. Les références 6, 7 et 8 désignent respectivement le disque de l'embrayage, le diaphragme d'embrayage et le carter d'embrayage et les références 10 et 12 respectivement le vérin hydraulique récepteur et butée d'embrayage et un actuateur d'embrayage formé par une électropompe qui alimente en liquide le vérin 10 par une liaison 13.

Pour la commande de l'actuateur, la figure montre en 14 une pédale d'embrayage qui est pourvue d'un capteur de la position de la pédale qui signale la position de celle-ci par une liaison électrique 15 à l'actuateur 12.

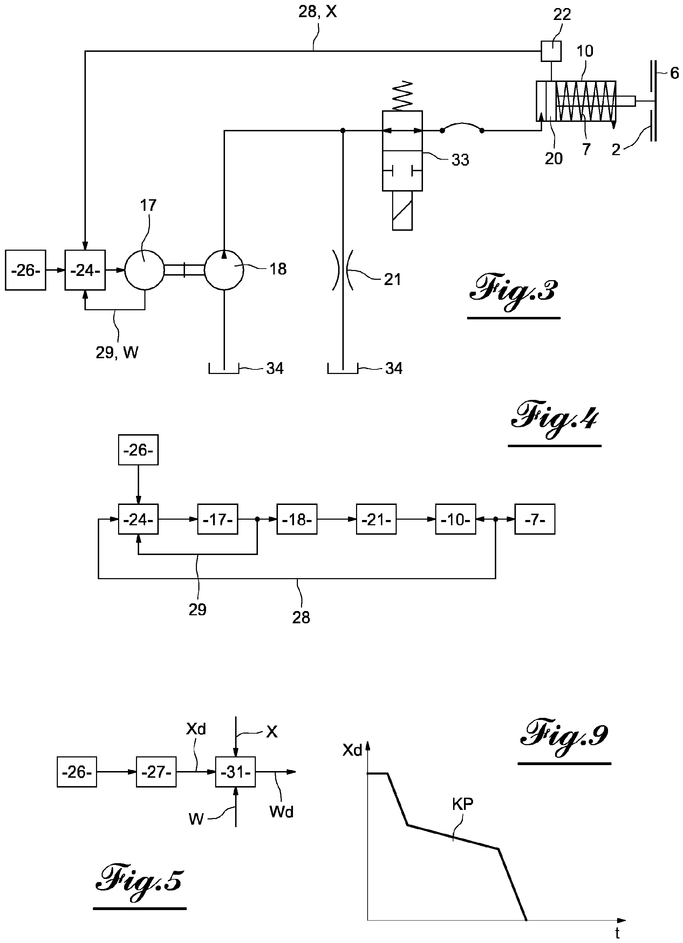

Le groupe électropompe comprend un moteur électrique 17 et une pompe volumétrique 18 qui est entraînée en rotation par le moteur électrique 17, comme on le voit sur les figures 3 à 8. La pompe est destinée à envoyer du liquide sous pression dans le vérin hydraulique 10 pour assurer le déplacement du piston du vérin indiqué en 20 sur les figures, entre ses positions d'embrayage et de débrayage. Le diaphragme en forme d'un ressort maintient l'embrayage fermé s'il n'y a pas d'action sur la pédale. Dans ce cas, la force d'appui est déterminée pour transmettre tout le couple produit par le moteur.

La figure 2 illustre la relation entre l'effort de compression du diaphragme et la course du piston du vérin hydraulique 10, c'est-à-dire la pression dans le vérin récepteur. Il est à noter qu'il y a une hystérésis entre les sens aller et retour, l'effort de débrayage étant supérieur à l'effort de ré-embrayage. Il est donc possible de contrôler l'effort de compression du diaphragme à transmettre à partir de la pression dans ladite liaison hydraulique, c'est-à-dire le vérin d'actuation d'embrayage.

La particularité de l'invention réside dans le principe de régulation appliquée. Plutôt que de contrôler un volume de fluide à transférer dans le vérin récepteur 10, à l'aide d'un système hydrostatique ou d'une valve pilotée, la pression est générée par la perte de charge au travers d'une restriction indiquée en 21 sur les figures 3, 4 et 6 à 8. Dans ce cas, la variation de la pression est dépendante du débit passant dans la restriction. La régulation de la pression, donc de l'effort de compression à transférer au diaphragme 7, est obtenue en contrôlant la vitesse de l'électropompe, c'est-à-dire du moteur électrique 17 qui entraîne en rotation la pompe 18.

D'autre part, un capteur 22 de la position du piston 20 est monté sur le vérin hydraulique et est intégré dans une boucle fermée d'asservissement qui permet de réguler la course x du piston du vérin.

La figure 4 illustre la chaîne des composants pour le pilotage de la position du piston du vérin en fonction de la vitesse du moteur 17. La figure montre que le moteur est commandé par un calculateur électronique 24 auquel sont appliqués par le réseau véhicule appelé CAN et indiqué en 26, les données du véhicule telles que la position de la pédale d'embrayage, la vitesse du véhicule, le régime moteur, le couple moteur et l'accélération. L'information sur la course du piston du vérin, à savoir la position x mesurée par le capteur 22 est également appliquée au calcul ateur 24 par une liaison 28.

La vitesse w de l'arbre de sortie du moteur est indiquée au calculateur par une liaison 29. A partir de toutes ces données, le calculateur produit la valeur de la vitesse de consigne wd du moteur. A cette fin, un correcteur 31 est prévu à l'intérieur du calculateur électronique 24, comme on le voit sur la figure 5.

Cette figure 5 montre le schéma présentant les entrées et sorties du calculateur. Comme on le voit sur la figure, le calculateur 24 établit à partir des données du véhicule et à l'aide d'un algorithme matérialisé sur la figure 5 en 27, la position de consigne xd du piston 20 du vérin récepteur 10. La valeur de la position de consigne est appliquée au correcteur 31 qui reçoit également la valeur de position mesurée x du capteur 22, du piston 20 du vérin récepteur 10, par l'intermédiaire de la liaison 28, et la valeur de la vitesse mesurée w du moteur électrique 17, par l'intermédiaire de la liaison 29. Le correcteur établit alors la vitesse de consigne wd de l'électropompe, c'est-à-dire du moteur 17.

La position de consigne xd est déterminée en amont du correcteur grâce à l'algorithme de calcul en fonction de données véhicule disponibles sur le réseau CAN.

Deux cas de figure sont à considérer :

1) Manoeuvre de DEBRAYAGE - REMBRAYAGE par le conducteur par action sur la pédale d'embrayage.
En situation de débrayage comme en rembrayage, la position de consigne xd est directement proportionnelle à la position de la pédale d'embrayage.

2) Exemple de manoeuvre automatique, notamment lors d'une mise en roues libres du véhicule.

2-1 Débrayage automatique :
Les conditions d'entrée sont :

- Aucune action du conducteur sur les pédales de frein, d'accélérateur et d'embrayage et la prise en compte du régime moteur ; cette fonction est applicable pour des rapports de boîte supérieurs à partir de la seconde.

Dans ce cas, un échelon de position de consigne xd est appliqué, qui va directement de 0 à xd max correspondant à la course de débrayage maximale.

2-2 Rembrayage automatique :
Les conditions de sortie du débrayage automatique s ont :

- Toute action du conducteur sur les pédales de fre in, d'accélérateur et d'embrayage et en tenant compte de la vitesse du véhicule. De plus, si une accélération longitudinale du véhicule est constatée, par exemple lors d'une descente, le rembrayage s'effectuera automatiquement afin de bénéficier du frein moteur.

On applique alors un profil de position de consigne xd prédéfini au début de la manoeuvre de rembrayage tel que représenté par exemp le à la figure 9 montrant un graphe illustrant la trajectoire de la position xd du piston 20 du vérin décroissante en fonction du temps t lors d'un rembrayage.

On constate qu'après une première phase initiale de rembrayage, la valeur xd diminue rapidement. Puis cette valeur décroit relativement faiblement dans une phase intermédiaire, avant qu'elle ne reprenne sa décroissance rapide. Cette phase intermédiaire constitue une phase critique qui comporte sensiblement au milieu le point de léchage indiqué en KP. La faible décroissance au cours de la phase intermédiaire rend le rembrayage transparent pour le conducteur, c'est-à- dire qu'elle est choisie pour que celui-ci ne ressente pas les effets de cette manoeuvre de transition qui peut alors se dérouler sans à-coup et sans gêne pour la conduite.

Ce profil est défini à partir des conditions initiales des données véhicule disponibles sur le réseau CAN, par exemple la vites se du véhicule, la position de la pédale d'embrayage, la position de la pédale d'accélération, la détection d'appui sur la pédale frein, la pression du maître-cylindre, le couple moteur, le régime moteur, l'accélération longitudinale du véhicule, la détection du point mort et le capteur de pente. Le profil initial est ensuite corrigé en temps réel en fonction de l'évolution des données du véhicule, à l'aide de tables de coefficients correcteurs qui viennent modifier la trajectoire initiale de la position de consigne xd de façon dynamique (à chaque pas de calcul).

Les valeurs de ces coefficients correcteurs sont déterminées de manière empirique grâce à des essais sur véhicule. Ces valeurs sont ajustées afin de rendre la manoeuvre de rembrayage automatique « transparente » pour le conducteur, c'est-à-dire pour que celui-ci ne soit pas gêné, comme cela est indiqué plus haut.

On donne ci-après la liste des équations physiques utilisées pour modéliser le système représenté. L'équation (1) indique l'équation de conservation des débits où Qp est le débit de la pompe, Qv le débit du vérin récepteur 10 et Qr, le débit traversant la restriction 21.

$$Qp = Qv + Qr \qquad (1)$$

Le débit dans la restriction 21 est donné par l'équation (2) où Cr est le coefficient de débit de la restriction, Sr la section de la restriction, P la pression en sortie de la pompe et p la masse volumique du fluide.

$$Qr = \frac{\sqrt{2}CrSr\sqrt{P}}{\sqrt{\rho}} \qquad (2)$$

Le débit dans le vérin récepteur 10 est indiqué par l'équation (3) où x est la position mesurée du piston du vérin récepteur et Sv la section du vérin.

$$Qv = (\frac{d}{dt}x)\,Sv \qquad (3)$$

L'équation du débit de la pompe est indiquée par l'équation (4)

$$Qp = Cy.Rv.w \qquad (4)$$

où Cy est la cylindrée de la pompe, Rv le rendement volumétrique de la pompe et w, la vitesse de rotation de l'électropompe.

L'équation (5) donne le principe fondamentale de la dynamique, en négligeant la force d'inertie du piston du vérin devant les autre s forces

$$O = PSv - F(x) \qquad (5)$$

où F(x) est l'effort de compression du diaphragme d'embrayage s'exerçant sur le piston du vérin récepteur 10 en fonction de la course définie par la position x du piston du vérin récepteur 10, conformément à la figure 2.

En combinant toutes ces équations (1) à (5), on obtient l'équation différentielle (6) ci-dessous, décrivant la dynamique de la position d u piston du vérin récepteur.

$$\frac{d}{dt}x = \frac{Cy . Rv\,w}{Sv} - \frac{\sqrt{2}CrSr\sqrt{F(x)}}{\sqrt{\rho}Sv^{3/2}} \qquad (6)$$

Il en résulte l'équation équivalente (7) ci-dessous où x est la variable de sortie et K une constante.

$$\frac{d}{dt}x = wK + f(x) \qquad (7)$$

Ce système est donc observable et contrôlable si la sortie x est mesurée, et la grandeur w est pilotée.

La position x peut alors converger vers une trajectoire désirée, c'est-à-dire une trajectoire de consigne xd en dépendance du temps. Le correcteur 31 du type « retour d'état non linéaire » est mis en place pour mettre en oeuvre cette fonction, conformément à la figure 5 où w est la vitesse mesurée de l'électropompe, x la position mesurée du piston du vérin récepteur, xd la position de consigne du piston du vérin récepteur 10 et wd la consigne de sortie, à savoir la vitesse de consigne de l'électropompe.

En se référant ci-après aux figures 3 et 6 à 8, on décrira ci-après plusieurs modes de réalisation du système selon l'invention.

La figure 3 illustre un premier mode de réal isation où une valve tout ou rien 33 de construction simple et donc d'un coût réduit est insérée dans le circuit hydraulique, entre la sortie de la pompe 18 qui aspire du liquide dans un réservoir 34 et envoie du liquide sous pression dans le vérin 10, en étant entraînée par le moteur 17 et le vérin hydraulique récepteur 10. Cette figure montre aussi la restriction 21 qui est montée en dérivation du vérin 10. Ce mode de réalisation permet de minimiser la consommation d'énergie quand l'embrayage est maintenu ouvert, par exemple dans les phases de roues libres. En effet, la valve étant insérée en série avec le vérin récepteur, lorsque l'embrayage est ouvert, la valve 33 est placée dans sa position d'isolement du vérin et la pression est maintenue. Puisqu'il s'agit d'une valve de type tout ou rien, l'étanchéité est assurée malgré la structure simple de la valve. Le moteur 17 peut alors être arrêté.

Cette configuration permet l'économie d'un clapet anti-retour. Le risque de surpression générée par la pompe est limité par la restriction 21 en lien direct avec elle. Un dispositif électronique de limitation de courant limitera la pression.

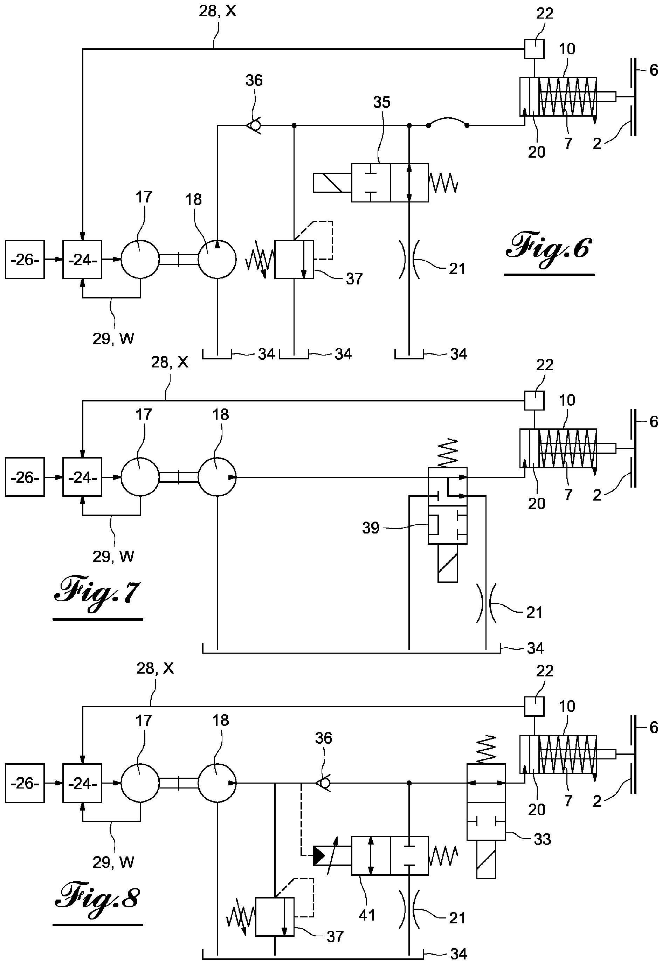

La figure 6 montre un mode de réalisation du système selon l'invention, dans lequel une valve tout ou rien 35 est insérée dans une branche en dérivation du vérin récepteur et en série avec la restriction 21. Cette configuration demande l'utilisation d'un clapet anti-retour 36 en sortie de pompe, pour isoler celle-ci du vérin récepteur. Le limiteur de pression 37 est optionnel pour éviter un excès de pression en utilisation.

La figure 7 illustre un mode de réalisation, dans lequel on utilise une valve quatre voies 39. Dans la position représentée, on retrouve la situation de la figure 3. L'avantage de cette configuration est de pouvoir maintenir l'électropompe au ralenti quand la valve est activée, permettant une action rapide sur l'embraya ge tout en minimisant la consommation. L'utilisation de cette valve permet de bypasser la restriction tout en laissant fonctionner l'électropompe sans charge, réduisant encore sa consommation et offrant toujours de la réactivité en cas de réactivation de contrôle de position d'embrayage.

Le mode de réalisation illustré par la figure 8 présente une solution avec une valve de séquence 41 ne s'ouvrant que sous une certaine pression. Tout le débit est envoyé vers le vérin récepteur avant d'atteindre ce niveau de pression à travers une valve tout ou rien 33. Le temps d'ouverture est ainsi réduit, autorisant une optimisation de la puissance nécessaire à l'ouverture de l'embrayage.

Le système actuateur qui vient d'être décrit et est représenté peut aussi être utilisé en technologie d'embrayage humide, composé de disques lubrifiés et refroidis par un flux de fluide. Dans ce cas, le couple à transmettre est proportionnel à la pression appliquée pour serrer les disques. Cette relation entre le couple à transmettre et la pression d'appui peut être considérée comme étant linéaire.

Concernant la restriction 21, il est avantag eux d'utiliser une restriction de configuration à paroi mince, pour diminuer l'impact de la température sur la perte de charge à travers la restriction.

**Revendications**

1. Système d'actuation hydraulique d'un dispositif d'embrayage, notamment pour véhicule automobile, qui comprend un groupe électropompe comportant une pompe volumétrique et un moteur électrique entrainant en rotation la pompe et un vérin hydraulique récepteur du liquide provenant de la pompe, de façon qu'il comprend un dispositif de pilotage de la vitesse de rotation du moteur (17) d'entraînement en rotation de la pompe (18) et un capteur (22) de la position du piston (20) du vérin récepteur (10), qui est intégré dans une boucle fermée de régulation de la position du piston du vérin et qui fait partie du dispositif de pilotage de la vitesse de rotation du moteur (17) **caractérisé en ce qu'**il comprend un calculateur (24) qui établit la vitesse de consigne (wd) à partir des données du véhicule auxquelles sont appliquées la valeur de vitesse mesurée (w) du moteur électrique et la valeur de position (x) du piston du vérin (10), envoyée par le capteur.

2. Système selon la revendication 1, **caractérisé en ce que** le calculateur (24) comporte un correcteur (31) auquel sont appliquées la valeur de position de consigne (xd) établie par le calculateur et les valeurs de la position mesurée (x) du piston du vérin récepteur et de la vitesse mesurée (w) du moteur électrique (17) et **en ce que** le correcteur établit la vitesse de consigne (wd) du moteur.

3. Système selon l'une des revendications 1 ou 2, **caractérisé en ce qu'**une restriction (21) est prévue en dérivation du vérin récepteur (10).

4. Système selon la revendication 3, **caractérisé en ce qu'**il comprend une restriction (21) et une valve tout ou rien (33) en série avec le vérin récepteur (10).

5. Système selon la revendication 3, **caractérisé en ce qu'**il comprend une valve tout ou rien (35) qui est montée en série avec la restriction (21), et un clapet anti-retour (36) d'isolement du vérin.

6. Système selon la revendication 3, **caractérisé en ce qu'**il comprend une valve quatre voies (39) qui constitue un bypass de la restriction (21) tout en laissant fonctionner l'électropompe sans charge.

7. Système selon la revendication 2, **caractérisé en ce qu'**il comprend une valve de séquence (41) qui est montée en série avec la restriction (21) et est commandée par la pression du liquide fourni par la pompe.

8. Système selon l'une des revendications précédentes, **caractérisé en ce que** l'électropompe est monodirectionnelle ou bidirectionnelle.

**Patentansprüche**

1. System zur hydraulischen Betätigung einer Kupplungsvorrichtung, insbesondere eines Kraftfahrzeugs, umfassend eine Elektropumpengruppe, umfassend eine volumetrische Pumpe und einen Elektromotor, der die Pumpe rotiert, und einen hydraulischen Kupplungsnehmerzylinder, der die Flüssigkeit aus der Pumpe aufnimmt, sodass es eine Einrichtung zur Regelung der Drehzahl des Motors (17), der die Pumpe (18) rotiert, und einen Sensor (22) zur Erkennung der Lage des Kolbens (20) des Kupplungsnehmerzylinders (10) besitzt, der in einen geschlossenen Kreis zur Regelung der Lage des Kolbens des Kupplungsnehmerzylinders integriert ist und Teil der Einrichtung zur Regelung der Drehzahl des Motors (17) ist, **dadurch gekennzeichnet, dass** es einen Rechner (24) umfasst, der die Solldrehzahl (wd) anhand der vom Sensor gesendeten Daten des Fahrzeugs ermittelt, auf die die gemessene Istgeschwindigkeit (w) des Elektromotors und der vom Sender gesendete Positionswert (x) des Kolbens des Kupplungsnehmerzylinders (10) aufgebracht sind.

2. System nach Anspruch 1, **dadurch gekennzeichnet, dass** der Rechner (24) einen Korrektor (31) umfasst, auf den der vom Rechner festgelegte Positionssollwert (xd) und die gemessenen Positionswerte (x) des Kolbens des Kupplungsnehmerzylinders sowie die Istgeschwindigkeit (w) des Elektromotors (17) angewendet werden, und dass der Korrektor die Sollgeschwindigkeit (wd) des Motors festlegt.

3. System nach einem der Ansprüche 1 -der 2, **dadurch gekennzeichnet, dass** eine Einengung (21) in einer Abzweigung des Kupplungsnehmerzylinders (10) vorgesehen ist.

4. System nach Anspruch 3, **dadurch gekennzeichnet, dass** es eine Einengung (21) und ein Ein-/Aus-Ventil (33) in Reihenschaltung mit dem Kupplungsnehmerzylinder (10) umfasst.

5. System nach Anspruch 3, **dadurch gekennzeichnet, dass** es ein Ein-/Aus-Ventil (35), das in Reihe mit der Einengung (21) montiert ist, und ein Rückschlagventil (36) zur Isolation des Zylinders umfasst.

6. System nach Anspruch 3, **dadurch gekennzeichnet, dass** es ein Vier-Wege-Ventil (39) umfasst, das die Einengung (21) überbrückt und dabei die Elektropumpe ohne Last funktionieren lässt.

7. System nach Anspruch 2, **dadurch gekennzeichnet, dass** es ein Zuschaltventil (41) umfasst, das in Reihe mit der Einengung (21) montiert ist und vom Druck der von der Pumpe bereitgestellten Flüssigkeit gesteuert wird.

8. System nach einem der vorstehenden Ansprüche, **dadurch gekennzeichnet, dass** die Elektropumpe uni- oder bidirektional ist.

**Claims**

1. Hydraulic actuation system of a clutch device, in particular for a motor vehicle, wherein it comprises a pump unit comprising a positive displacement pump and an electric motor driving the pump in rotation with a hydraulic cylinder receiving liquid from the pump, and wherein it comprises a device for controlling the speed of rotation of the motor (17) rotating the pump (18) and a sensor (22) to determine the position of the piston (20) of the receiving cylinder (10) that is integrated in a closed loop to regulate the position of the piston of the cylinder and that is part of the device for controlling the speed of rotation of the motor (17), **characterized in that** it comprises a computer (24) which sets the target speed (wd) from the vehicle data to which are applied the measured speed value (w) of the electric motor and the position value (x) of the piston of the cylinder (10) sent by the sensor.

2. System according to claim 1, **characterized in that** the computer (24) comprises a corrector (31) to which are applied the set position value (xd) established by the computer as well as the values of the measured position (x) of the piston of the receiving cylinder and the measured speed (w) of the electric motor (17), and **in that** the corrector sets the target speed (wd) of the motor.

3. System according to one of claims 1 or 2, **characterized in that** a restriction (21) is provided bypassing the receiving cylinder (10).

4. System according to claim 3, **characterized in that** it comprises a restriction (21) and an on-off valve (33) in series with the receiving cylinder (10).

5. System according to claim 3, **characterized in that** it comprises an on-off valve (35) which is connected in series with the restriction (21), and a non-return valve (36) for isolating the cylinder.

6. System according to claim 3, **characterized in that** it comprises a four-way valve (39) bypassing the restriction (21) while leaving the electropump running without load.

7. System according to claim 2, **characterized in that** it comprises a sequence valve (41) which is connected in series with the restriction (21) and is controlled by the pressure of the liquid supplied by the pump.

8. System according to one of the preceding claims, **characterized in that** the electropump is monodirectional or bidirectional.

*Fig.1*

*Fig.2*

*Fig.3*

*Fig.4*

*Fig.5*

*Fig.9*

EP 3 279 494 B1

*Fig.6*

*Fig.7*

*Fig.8*

9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2703007

- WO 2015114125 A